# EUROPEAN PATENT SPECIFICATION

(11) **EP 4 312 168 B1**
(45) Date of publication and mention of the grant of the patent: **17.06.2026**
(21) Application number: 23186797.9
(22) Date of filing: 20.07.2023
(51) Int. Cl.: G06Q 10/0631, G06Q 30/0601, G06Q 30/08

(54) **EVENT ENGINE USING ACCESSIBLE SCENARIO LIBRARY**
EREIGNIS-ENGINE MIT ZUGÄNGLICHER SZENARIOBIBLIOTHEK
MOTEUR D'ÉVÉNEMENTS UTILISANT UNE BIBLIOTHÈQUE DE SCÉNARIOS ACCESSIBLES

(30) Priority: 27.07.2022 IN 202211042963; 20.09.2022 US 202217948917
(43) Date of publication of application: 31.01.2024
(73) Proprietor: SAP SE, 69190 Walldorf (DE)
(72) Inventor: AHUJA, Monika, 69190 Walldorf (DE); N, Sunitha, 69190 Walldorf (DE); JOSE, Ajay, 69190 Walldorf (DE)
(74) Representative: Müller-Boré & Partner Patentanwälte PartG mbB

(56) References cited:
- US-A1- 2013 110 566

## Description

### CROSS-REFERENCE TO RELATED APPLICATIONS

The present application claims priority to India Provisional Patent Application No. 202211042963, filed July 27, 2022, and titled "Event Engine Using Accessible Scenario Library".

### BACKGROUND

An enterprise may rely on a suite of enterprise software applications for sourcing, procurement, supply chain management, invoicing, and payment. These enterprise software applications may provide a variety of data processing functionalities including, for example, billing, invoicing, procurement, payroll, time and attendance management, recruiting and onboarding, learning and development, performance and compensation, workforce planning, and/or the like. An enterprise resource planning (ERP) application may track resources, such as cash, raw materials, and production capacity, and the status of various commitments such as purchase order and payroll. In the event the enterprise interacts with large and evolving roster of external vendors, the enterprise resource planning (ERP) application may be integrated with a supplier lifecycle management (SLM) application configured to perform one or more of supplier identification, selection and segmentation, onboarding, performance management, information management, risk management, relationship management, and offboarding.

US 2013/110566 A1 discloses a prior-art multiple criteria and multi-level evaluation method or tool for proposals from bids in a purchasing process.

### SUMMARY

The invention is set out in the appended set of claims. Particular embodiments are the subject of the dependent claims.

Implementations of the current subject matter can include methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes, it should be readily understood that such features are not intended to be limiting. The claims that follow this disclosure are intended to define the scope of the protected subject matter.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 depicts a system diagram illustrating a procurement system, in accordance with some example embodiments;
FIG. 2 depicts an example sourcing workflow, in accordance with some example embodiments;
FIG. 3 depicts a block diagram illustrating an example of the procurement system including a scenario library, in accordance with some example embodiments;
FIG. 4A depicts an example user interface, in accordance with some example embodiments;
FIG. 4B depicts an example user interface, in accordance with some example embodiments;
FIG. 5 depicts a flowchart illustrating an example of a process for improving sourcing event scenario creation, in accordance with some example embodiments; and
FIG. 6 depicts a block diagram illustrating an example of a computing system, in accordance with some example embodiments.

When practical, similar reference numbers denote similar structures, features, or elements.

### DETAILED DESCRIPTION

Enterprise software applications may provide a variety of procurement and supply chain management solutions including enterprise resource planning (ERP) and supplier lifecycle management (SLM). In particular, enterprise software applications may assist users with sourcing events to suppliers. During a sourcing event, there are many factors to consider when awarding suppliers. The user might decide to select (i.e., award) a single supplier for all line items in an event, or multiple suppliers for various line items in the event. Determining the number of suppliers and which suppliers to award can be complicated, particularly in large and complex events, which have numerous lots and line items, with multiple suppliers bidding to supply the event.

A user may use a generated event scenario to create alternative winner scenarios to determine which suppliers to award the sourcing event. Sourcing event scenarios may include a possible combination of suppliers given a set of constraints, goals, and the like for a particular event. Thus, the creation of event scenarios helps make the award decision simpler by allowing the user to compare multiple event scenarios before awarding the sourcing event to a selection of suppliers. However, sourcing event scenarios may generally only be created within the context of a particular event and remain specific to the particular event. As a result, users are unable to reuse sourcing event scenarios for future sourcing events or are unable to share the sourcing event scenarios across multiple users, leading to users recreating sourcing event scenarios for each event. This causes poor computational and organizational efficiency.

The procurement system consistent with embodiments described herein may implement a scenario library. The scenario library may include a set of pre-packaged sourcing event scenarios that can be used and/or modified by users. For example, the pre-packaged sourcing event scenarios may allow users to view constraints and formulae that make up the particular sourcing event scenarios, edit, save, and run the constraints of the sourcing event scenarios, create, save, modify, and reuse templates for generating sourcing events, and disable particular constraints during optimization of the sourcing event scenarios when awarding sourcing events to a possible combination of suppliers. The scenario library may be accessible to the same user for use during creation of sourcing event scenarios for different events and/or to different users. Accordingly, the scenario library allows for complex sourcing event scenarios to be generated and/or shared across client devices associated with different users, reduces training for new users, and/or improves the ability to modify existing sourcing event scenarios.

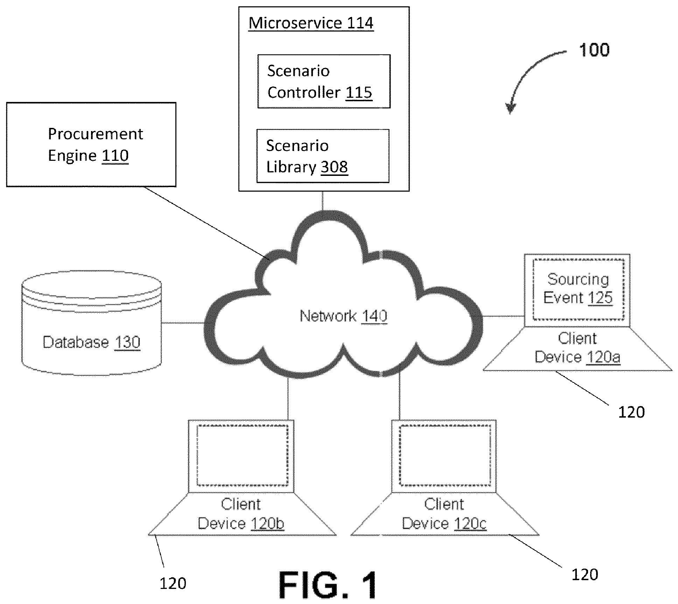

FIG. 1 depicts a system diagram illustrating an example of a procurement system 100, in accordance with some example embodiments. Referring to FIG. 1, the procurement system 100 may include a procurement engine 110 (also referred to herein as an "event engine"), a microservice 114, one or more client devices 120, and a database 130. The scenario controller 115, the client device 120, and the database 130 may be communicatively coupled via a network 140. The network 140 may be any wired network and/or a wireless network including, for example, a wide area network (WAN), a local area network (LAN), a virtual local area network (VLAN), a public land mobile network (PLMN), the Internet, and/or the like.

The database 130 may be a database including, for example, a relational database, a non-structured query language (NoSQL) database, an in-memory database, a graph database, a key-value store, a document store, and/or the like. The database 130 may store one or more sourcing event scenarios, as described in more detail below.

The one or more client devices 120 may be a processor-based device including, for example, a smartphone, a tablet computer, a wearable apparatus, a virtual assistant, an Internet-of-Things (IoT) appliance, and/or the like. The one or more client devices 120 may include a first client device 120a, a second client device 120b, a third client device 120c, and the like. The first client device 120a, the second client device 120b may each be associated with at least one user and/or at least one supplier.

As used herein, the "procurement engine" may include one or more applications, such as a cloud service or SaaS applications. The procurement engine 110 may be configured to coordinate and/or generate a sourcing event 125 created at a first client device 120a associated with a user by at least inviting one or more suppliers to participate in the sourcing event 125, receiving responses (e.g., electronic bids and/or the like) from the participating suppliers, and awarding the sourcing event 125 to one or more of the participating suppliers. For example, the procurement engine 110 may receive one or more user inputs or requests to generate the sourcing event 125. The procurement engine 110 may receive, from the first client device 120a, one or more user inputs creating the sourcing event 125. The one or more user inputs may specify, for example, one or more of a title, description, region, start date, end date, and commodity for the sourcing event 125. As used herein, a "sourcing event" may refer to an electronic purchase order, an electronic request for proposal, an electronic invitation for bid, and/or the like, created by the one or more client devices, such as the client device associated with the user (e.g., the first client device 120a, the second client device 120b, and/or the third client device 120c).

As described herein, the sourcing event 125 may be used to award one or more suppliers contracts to perform or otherwise handle one or more line items of the sourcing event 125. Large and complex sourcing events 125 may include line items that are awarded to a plurality of suppliers. The line items of the sourcing event 125 may include criteria specified by a user associated with the sourcing event 125. Examples of such criteria may include certain terms such as one or more of a total currency, quantity, quality, brand, discounts, and associated with each supplier's response (e.g., electronic bid). Generation of the sourcing event 125 is described in more detail below.

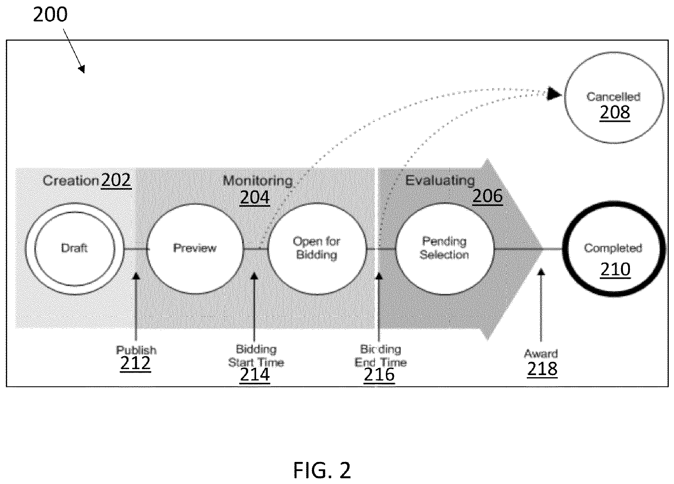

FIG. 2 depicts an example workflow 200 for creating and awarding the sourcing event 125, according to embodiments of the current subject matter. One or more steps of the workflow 200 may be performed by the procurement engine 110 and/or the scenario controller 115 of the microservice 114. For example, at 202, at least one of the client devices 120 receives an indication from the user to create a sourcing event, such as the sourcing event 125 and at 212, the sourcing event is published by the procurement engine 110 to be accessible to suppliers. The sourcing event refers to an electronic purchase order, an electronic request for proposal, an electronic invitation for bid, and/or the like. Thus, when the sourcing event is published at 212, the suppliers and/or the user may monitor a status of the sourcing event at 204. Once published, the sourcing event may be available for preview to the suppliers via the one or more client devices 120 and at 214, the bidding may be opened. Thus, at 214, the one of the client devices 120 may receive at least one bid from the one or more clients associated with the suppliers for one or more line items of the sourcing event. At 216, the bidding period may end such that the one or more client devices 120 may not receive any additional bids from the one or more clients associated with the suppliers.

In some embodiments, the procurement engine 110 may monitor the status of the sourcing event 125. For example, the procurement engine 110 may publish the sourcing event at 212 and begin the bidding at 214 after a preview period of the sourcing event 125 has elapsed. The procurement engine 110 may end the bidding at 216. After the end of the bidding, the procurement engine 110 may store the bids received from the one or more client devices 120 associated with the suppliers, including at least one line item associated with each bid and at least one term associated with the at least one line item that were received as part of the bid. The bids, the at least one line item, and the at least one term may be stored in the database 130.

At 206, the received bids may be evaluated to determine a combination of suppliers to award the sourcing event at 218 before completing the sourcing event at 210. At 208, the sourcing event 125 may be canceled at any point during the workflow 200, such as before or after the bidding start time at 214 and/or the bidding end time at 216. The sourcing event 125 may be canceled for any reasons, such as when an insufficient quantity (e.g., less than a threshold amount) or an inadequate quality of bids have been received during the monitoring at 204.

To evaluate the received bids, the at least one line item, and the at least one term stored in the database 130, at least one sourcing event scenario may be created. In some embodiments, a plurality of sourcing event scenarios may be created for comparison to select the best bid. The best bid may be an optimization sourcing event scenario that a user may run across line items and/or suppliers to determine the lowest bid for each line item. This can be extended across line item groups and/or individual line items.

A sourcing event scenario, as described herein, includes a possible combination of suppliers for the sourcing event. The sourcing event scenario may additionally and/or alternatively include constraints and/or the terms associated with each line item of the sourcing event 125 in a particular bid. For example, the sourcing event scenario may include a possible combination of suppliers for handling each line item of the sourcing event along with associated terms such as one or more of a total, currency, quantity, quality, brand, and/or discount associated with each supplier's response for each line item of the sourcing event. Accordingly, the sourcing event scenario may include a combination of goals, line items, suppliers, constraints, or the like the user would like to run (e.g., using the procurement engine 110 and/or scenario controller 115) to improve sourcing of the sourcing event 125.

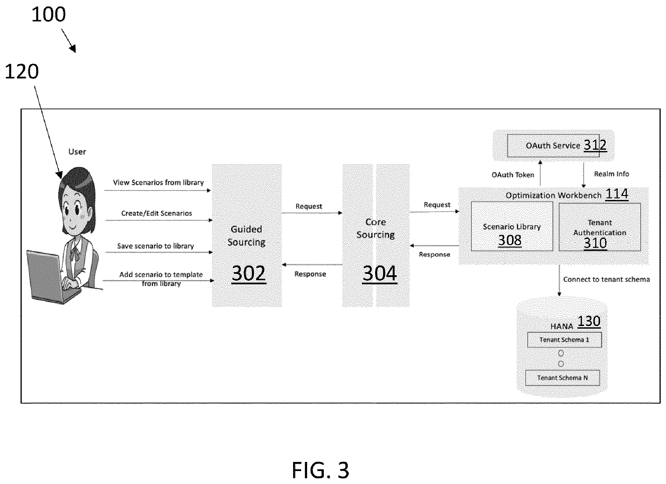

Referring again to FIG. 1, the microservice 114 may include the scenario controller 115 and a scenario library 308 (see FIG. 3). As used herein, the "microservice" 114 may include one or more application services, cloud services, and/or the like that are configured to receive calls, such as API calls. The microservice 114 may include an optimization workbench microservice, among other microservices.

The scenario controller 115 may be a controller that is dedicated to the scenario library 308. The scenario controller 115 may include a processor and at least one memory resulting in operations for handling requests associated with the scenario library 308. The requests may include one or more of a request to create, modify, save, and/or run a sourcing event scenario, or the like. The requests may be received from the one or more client devices 120. The requests may be sent to the microservice 114 for handling by the scenario controller 115 by the procurement engine 110.

The scenario library 308 may include a set of pre-packaged sourcing event scenarios that can be used and/or modified by users. For example, the pre-packaged sourcing event scenarios may allow users to view constraints and formulae that make up the particular sourcing event scenarios, edit, save, and run the constraints of the sourcing event scenarios, and/or disable particular constraints during creation of the sourcing event scenarios when awarding sourcing events to a possible combination of suppliers.

The scenario library 308 may be accessible to the same user for use during creation of sourcing event scenarios for different events. Additionally, and/or alternatively, the scenario library 308 may be accessible to different users. For example, at least one sourcing event scenario may be stored in the scenario library 308 (e.g., via the database 130). The at least one sourcing event scenario may be created and/or stored in the scenario library 308 by a first client device (e.g., the first client device 120a) associated with a first user. The first client device and/or a second client device (e.g., the second client device 120b) associated with a second user may access the scenario library 308 to retrieve and/or edit the stored sourcing event scenario. The first client device may access the scenario library 308 to create a new sourcing event scenario and/or modify an existing sourcing event scenario. This reduces computing resources as an entirely new sourcing event scenario may not need to be generated by the scenario controller 115, since the scenario library 308 stores a plurality of sourcing event scenarios. In some embodiments, the modified and/or created sourcing event scenarios are stored at the scenario library 308 and/or the database 130 coupled to the scenario library 308.

In some embodiments, the sourcing event 125 is generated by the procurement engine 110 using a sourcing event template, which may include a plurality of pre-set line items and/or criteria for a sourcing event. The sourcing event template may be pre-set and/or newly created. The sourcing event template may be generated by modifying an existing sourcing event template. For example, the sourcing event template may be modified by adding a reference to at least one or a subset of the plurality of sourcing event scenarios from the scenario library 308.

For example, at least one of the client devices 120 may receive a request to generate the sourcing event. The request may include a selection of at least one sourcing event template based on which the sourcing event 125 is generated. To generate the sourcing event using the sourcing event template, the procurement engine 115 may (e.g., in response to the request to generate the sourcing event) call the scenario controller 115 to access at least one of a plurality of sourcing event scenarios including pre-packaged sourcing event scenarios, newly created sourcing event scenarios, and/or modified sourcing event scenarios, such as based on the reference. The selected sourcing event scenarios referenced by the sourcing event template may be run to generate the possible combination of suppliers for the sourcing event. The sourcing event template may be used such that subsequent sourcing events generated based on a particular sourcing event template may automatically include all the sourcing event scenarios referenced by the template, reducing computing resources.

This allows for all sourcing events created using the template to automatically include the sourcing event scenarios associated with the template. Such configurations improve processing speeds in running sourcing event scenarios. Such configurations may also reduce the amount of time for selecting the combination of suppliers from the possible combinations of suppliers for performing each of the line items at least because the sourcing event scenarios have already been created and/or run. Thus, the scenario controller 115 may more easily determine and/or display the lowest bid for each line item. FIG. 3 depicts an example architecture of the procurement system 100, according to embodiments of the current subject matter. As shown in FIG. 3, guided sourcing 302 receives requests (e.g., a first request, a second request, etc.) from the one or more client devices 120, such as a first client device 120a associated with a first user, a second client device 120b associated with a second user, a third client device 120c associated with a third user, or the like. The guided sourcing 302 may be a front-end application in communication with a core sourcing 304. The guided sourcing 302 may receive requests to access the scenario library 308. For example, the guided sourcing 302 may receive the at least one request, as described herein to view sourcing event scenarios using the scenario library 308, create and/or edit sourcing event scenarios using the scenario library 308, save sourcing event scenarios at the scenario library 308, add sourcing event scenarios to sourcing event templates, and/or the like.

The guided sourcing 302 may receive requests and send the requests to the core sourcing 304. The core sourcing 304 may be and/or include the procurement engine 110, as described herein. Accordingly, the procurement engine 110 may determine, based on the request, an identifier in the request, or the like, that the requests include a request to access the scenario library 308. In response to the determination, the procurement engine 110 may send the request to the microservice 114. For example, the procurement engine 110 may receive a request to generate a sourcing event and/or to generate a sourcing event scenario, as described herein.

Referring to FIG. 3, the microservice 114 may receive the request (e.g., a call to access at least one of the plurality of sourcing event scenarios via the scenario library 308). The scenario controller 115 of the microservice 114 may handle the request. As described herein, the scenario controller 115 may be coupled to the scenario library 308 and/or be dedicated to handling requests at and/or using the scenario library 308.

In some embodiments, the scenario controller 115 handles the request by authorizing or otherwise verifying the request prior to permitting access to the scenario library 308. The scenario controller 115 may authorize the request using an authentication service such as OAuth Service 312. The scenario controller 115 may send a token, such as an OAuth token to the OAuth Service 312 to verify the request. This verifies the client device 120 and/or the user has permission to use the scenario library 308 and/or to access the database 130. When the OAuth Service 312 verifies the request, the OAuth Service 312 sends realm information to the microservice 114 (e.g., to the scenario controller 115).

Additionally, and/or alternatively, the scenario controller 115 may use tenant authentication 310 to authorize the tenant associated with the client device 120 from which the request was received. The tenant authentication 310 may verify a tenant identifier to authenticate the first client device 120a (or another client device 120) associated with the first user (or other user) prior to accessing the database 130. Verification of the tenant identifier may authenticate the requesting client device 120 and grant access to the database 130. Tenant authentication 310 may additionally and/or alternatively grant access to a particular portion of the database 130 for handling the request. For example, authorizing the client device 120 may connect the scenario controller 115 with the tenant schema at the database 130 to access the stored sourcing event scenarios, templates, and/or the like.

Referring again to FIG. 3, the scenario controller 115 may use the scenario library 308 to handle the received request and to provide a response to the request, such as via the core sourcing 304 and/or the guided sourcing 302, to the client device 120. To handle the request using the scenario library 308, the scenario controller 115 accesses the database 130 in communication with the scenario controller 115. The database 130 may include a plurality of sourcing event scenarios accessible to the first user, a second user associated with a second client device (e.g., the second client device 120b), a third user associated with a third client device (e.g., the third client device 120c), and so on.

Based on the sourcing event scenarios accessed at the scenario library 308, the procurement engine 110 may generate a user interface for display at the client device 120. The user interface may include the plurality of sourcing event scenarios accessed from the database 130 (e.g., via the scenario library 308). The user interface may include a plurality of folders including the first folder, the second folder, or the like. The plurality of folders may be private such that it is only accessible to the first user. The plurality of folders may be shared such that other users (e.g., the second user, a third user, or the like) may access the plurality of folders. The user interface may additionally and/or alternatively include a subset of the plurality of sourcing event scenarios.

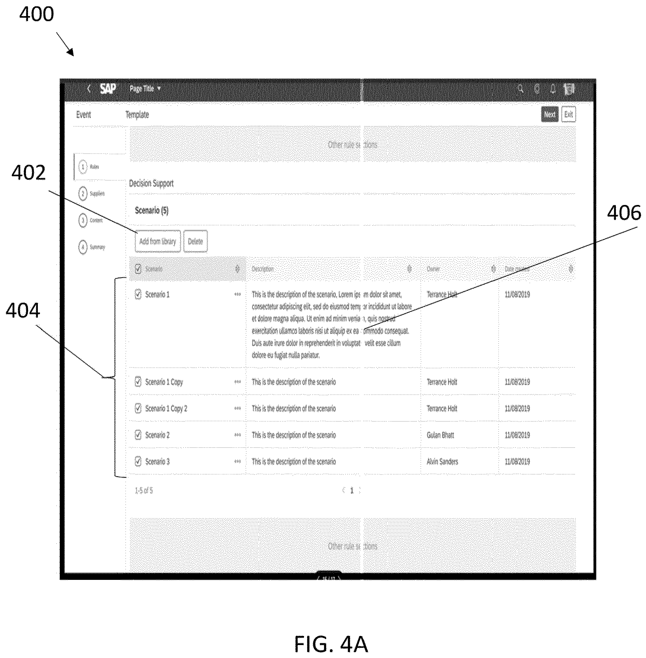

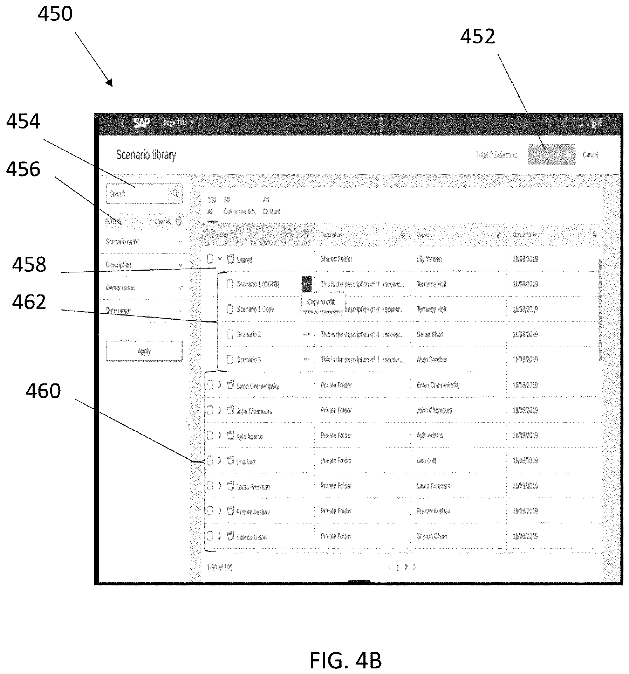

FIG. 4A illustrates an example user interface 400 and FIG. 4B illustrates an example user interface 450, according to some example embodiments. The user interfaces 400, 450 may be displayed at the first client device 120a, the second client device 120b, the third client device 120c, and so on.

The user interface 400 may be used to create, modify, save, access, or the like at least one sourcing event template. For example, the user interface 400 shows a folder of a first user at the first client device 120a. The folder is shown as including a plurality of sourcing event scenarios at 404 referenced by a sourcing event template, as described herein. As depicted in the user interface 400, each of the sourcing event scenarios at 404 may include a corresponding description 406, an owner including the user that created the corresponding sourcing event scenario, and a creation date for the corresponding sourcing event scenario. The user interface 400 may also include one or more buttons or other user selectable elements that can be selected at the associated client device 120. For example, the user interface 400 may include an "Add from library" button 402, which when selected by the user and upon detection of the selection, generates the user interface 450. Selection of the button 402 allows the user to interact with the user interface 450 to add one or more sourcing event scenarios from the scenario library 308 to the folder shown in the user interface 400 that includes the sourcing event scenarios to be referenced by the sourcing event template. This also may allow for modification of an existing sourcing event template.

Referring to FIG. 4B, the user interface 450 may include a plurality of folders corresponding to different users. The folders may be shared (e.g., folder 458) such that the folders include a plurality of shared sourcing event scenarios 462 that may be accessed by multiple users. Access to the sourcing event scenarios 462 may be granted based on verification using the OAuth Service 312 and/or the tenant authentication 310. The folders may additionally and/or alternatively include private folders such as the private folders 460. The private folders 460 may be accessed by only the corresponding user for later use in creating new sourcing event scenarios. The user interface 450 also allows for the user to filter the sourcing event scenarios stored in the scenario library 308 by a scenario name, a description, an owner name, a data range, or the like of the sourcing event scenario, via the filter 456. Additionally, and/or alternatively, the user interface 450 allows the user to search for at least one sourcing event scenario via the search tool 454. Additionally, and/or alternatively, the user interface 450 allows the user to add, via selection of the "Add to template" button 452, at least one of the sourcing event scenarios to the folder showing the sourcing event scenarios referenced by at least one of the sourcing event templates (e.g., the user interface 400 shown in FIG. 4A).

Referring again to FIG. 3, the scenario controller 115 may create a sourcing event scenario based on the plurality of sourcing event scenarios accessible using the scenario library 308. For example, the scenario controller 315 may modify an existing sourcing event scenario for the existing sourcing event scenario to create a new sourcing event scenario for a particular sourcing event. The scenario controller 115 may store the newly created or modified sourcing event scenario in the database 130 for use by at least the first user, the second user, or the like, in creating another sourcing event scenario. The sourcing event scenarios may be stored and/or accessed via the user interface 450 shown in FIG. 4B.

The scenario controller 115 and/or the procurement engine 110 may detect a selection of one of the plurality of sourcing event scenarios, such as via at least one of the client devices 120. Based on the detection of the selection, the scenario controller 115 and/or the procurement engine 110 may display the generated possible combination of suppliers for the sourcing event according to the sourcing event scenario. Based on receipt of a selection (e.g., a subsequent selection) via at least one of the client devices 120, the procurement engine 110 may award at least a portion of the sourcing event (e.g., at least one line item) to at least one of the suppliers of the combination of suppliers. As a result, the created sourcing event scenarios may be used to create additional sourcing event scenarios and/or may be added to sourcing event templates, reducing computing and other resources, and improving (e.g., reduce processing time, increase speed, improve efficiency, and/or the like) the awarding of at least the portion of the sourcing event to at least one of the suppliers.

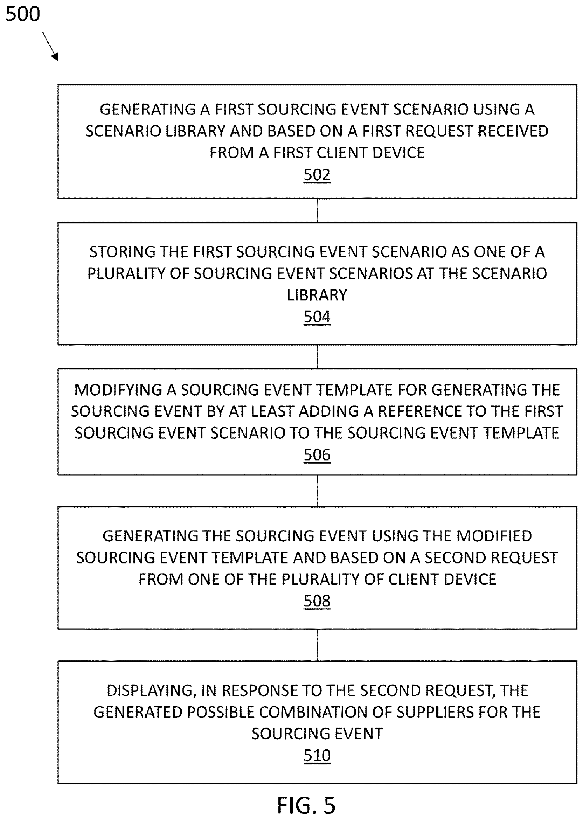

FIG. 5 depicts a flowchart illustrating a process 500 for implementing the scenario library 308 to create and/or modify a sourcing event scenario for a sourcing event (e.g., the sourcing event 125), create and/or modify a sourcing scenario template, and/or generate a sourcing event, in accordance with some example embodiments. Referring to FIGS. 1-4B, one or more aspects of the process 500 may be performed by the procurement system 100, the procurement engine 110, the scenario controller 115, the scenario library 308, other components therein, and/or the like.

Referring to FIG. 5, at 502, a first sourcing event scenario may be generated, such as by the procurement engine 110 and/or the scenario controller 115 and based on a first request using a scenario library. The scenario controller may receive the first request from a first client device (e.g., the first client device 120a) associated with a first user. The first sourcing event may include a possible combination of suppliers for a sourcing event (e.g., the sourcing event 125). As described herein, the scenario controller may be coupled to the scenario library and/or may be dedicated to handling the first request (among other requests) at the scenario library. The scenario library provides access to a plurality of sourcing event scenarios to the plurality of client devices including at least the first client device. The first sourcing scenario may be stored in a first folder associated with a first user. The first sourcing scenario may also be accessible to a second user.

The sourcing event may include a plurality of line items and a plurality of terms associated with the plurality of line items. The plurality of terms includes at least one of a commodity, discount, or a quantity.

At 504, the first sourcing event scenario is stored, such as by the procurement engine, as one of the plurality of sourcing event scenarios at the scenario library. For example, the procurement engine may indicate to the scenario controller coupled to the scenario library to store the first sourcing event scenario in the database coupled with the scenario library.

At 506, the procurement engine may modify a sourcing event template for generating the sourcing event. For example, a pre-existing template may be modified. To modify the sourcing event template, the procurement engine may add a reference to the first sourcing event scenario to the sourcing event template. For example, the procurement engine may add a plurality of references corresponding to a plurality of first sourcing event scenarios to the sourcing event template. This allows for any subsequent sourcing event generated based on the modified template to automatically include the added first sourcing event scenario or plurality of sourcing event scenarios.

At 508, the sourcing event may be generated, such as by the procurement engine, using the sourcing template based on a second request from one of the plurality of client devices. The second request may be received from a second client device of the plurality of client devices. The procurement engine may call the controller of the scenario library to access the first sourcing event scenario at the scenario library based on the reference included in the template. The procurement engine may run the first sourcing event scenario to generate the possible combination of suppliers for the sourcing event.

In some embodiments, a second sourcing template may be generated based on the sourcing template. Generating the second sourcing template may include calling the scenario controller of the scenario library to access the plurality of sourcing event scenarios at the scenario library. Generating the second sourcing template may also include modifying the sourcing template to include a second reference to a second sourcing event scenario of the plurality of sourcing event scenarios.

At 510, the procurement engine may display the generated possible combination of suppliers for the sourcing event in response to the second request. In some embodiments, the procurement engine may receive feedback based on the displaying. The feedback may be associated with awarding at least the portion of the sourcing event to at least one of the suppliers of the possible combination of suppliers.

In some embodiments, the scenario controller handles the request (e.g., call) by authorizing the request. For example, the scenario controller may use a token to verify the request and/or that the user has permission to access a database (e.g., the database 130) in communication with the scenario controller. Additionally, and/or alternatively, the scenario controller may authenticate the first client device (or other client device) associated with the first user prior to accessing the database. For example, the scenario controller may authenticate the tenant identifier associated with the first client device (or other client device). In other words, the scenario controller may authenticate the first client device prior to permitting access to the first sourcing event scenario at the scenario library.

In some embodiments, the scenario controller may access the database by retrieving a subset of the plurality of sourcing event scenarios from a first folder associated with the first user or a second folder associated with the second user. For example, the scenario controller may receive an indication of a user interaction with a user interface, indicating the particular folder of the first and second folders to access.

In some embodiments, the procurement engine may generate a user interface for display at the first client device. The user interface may include the plurality of sourcing event scenarios. The user interface may include a plurality of folders including the first folder, the second folder, or the like. The plurality of folders may be private such that it is only accessible to the first user. The plurality of folders may be shared such that other users (e.g., the second user, a third user, or the like) may access the plurality of folders. The user interface may additionally and/or alternatively include a subset of the plurality of sourcing event scenarios.

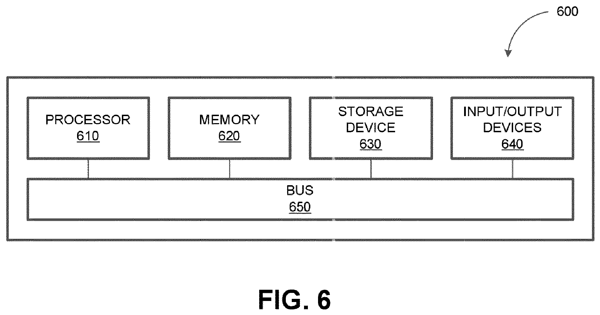

FIG. 6 depicts a block diagram illustrating a computing system 600, in accordance with some example embodiments. Referring to FIGS. 1-5, the computing system 600 can be used to implement the procurement engine 110, the scenario controller 115, the procurement system 100, and/or any components therein.

As shown in FIG. 6, the computing system 600 can include a processor 610, a memory 620, a storage device 630, and an input/output device 640. The processor 610, the memory 620, the storage device 630, and the input/output device 640 can be interconnected via a system bus 650. The processor 610 is capable of processing instructions for execution within the computing system 600. Such executed instructions can implement one or more components of, for example, the procurement engine 110, the scenario controller 115, the procurement system 100. In some implementations of the current subject matter, the processor 610 can be a single-threaded processor. Alternately, the processor 610 can be a multi-threaded processor. The processor 610 is capable of processing instructions stored in the memory 620 and/or on the storage device 630 to display graphical information for a user interface provided via the input/output device 640.

The memory 620 is a computer readable medium such as volatile or non-volatile that stores information within the computing system 600. The memory 620 can store data structures representing configuration object databases, for example. The storage device 630 is capable of providing persistent storage for the computing system 600. The storage device 630 can be a floppy disk device, a hard disk device, an optical disk device, or a tape device, or other suitable persistent storage means. The input/output device 640 provides input/output operations for the computing system 600. In some implementations of the current subject matter, the input/output device 640 includes a keyboard and/or pointing device. In various implementations, the input/output device 640 includes a display unit for displaying graphical user interfaces.

According to some implementations of the current subject matter, the input/output device 640 can provide input/output operations for a network device. For example, the input/output device 640 can include Ethernet ports or other networking ports to communicate with one or more wired and/or wireless networks (e.g., a local area network (LAN), a wide area network (WAN), the Internet).

In some implementations of the current subject matter, the computing system 600 can be used to execute various interactive computer software applications that can be used for organization, analysis and/or storage of data in various (e.g., tabular) format (e.g., Microsoft Excel^{®}, and/or any other type of software). Alternatively, the computing system 600 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via the input/output device 640. The user interface can be generated and presented to a user by the computing system 600 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results.

## Claims

1. A system (100: 600), comprising:
at least one data processor (610); and
at least one memory (620) storing instructions that result in operations when executed by the at least one data processor, the operations comprising:
generating (502) a first sourcing event scenario using a scenario library (308) and based on the first request received from the first client device (120a), wherein the first sourcing event scenario comprises a possible combination of suppliers for a sourcing event, and wherein the scenario library (308) is coupled to a controller (115) dedicated to handling the first request using the scenario library (308), and wherein the scenario library (308) provides access to a plurality of sourcing event scenarios to a plurality of client devices (120) comprising the first client device;
storing (504) the first sourcing event scenario as one of the plurality of sourcing event scenarios (404) at the scenario library (308);
modifying (506) a sourcing event template for generating the sourcing event, the modifying comprising adding a reference to the first sourcing event scenario to the sourcing event template;
generating (508) the sourcing event using the modified sourcing event template and based on a second request from one of the plurality of client devices (120), wherein the generating comprises: calling the controller (115) of the scenario library (308) to access the first sourcing event scenario at the scenario library (308) based on the reference; and running the first sourcing event scenario to generate the possible combination of suppliers for the sourcing event (125),
generating a second sourcing event template based on the sourcing event template, wherein the generating the second sourcing event template comprises: calling the controller (115) of the scenario library (308) to access the plurality of sourcing event scenarios (404) at the scenario library (308); and modifying the modified sourcing event template to include a second reference to a second sourcing event scenario of the plurality of sourcing event scenarios (404), wherein the sourcing event templates are used such that subsequent sourcing events generated based on a particular sourcing event template automatically include all the sourcing event scenarios referenced by the template; and
displaying (510), in response to the second request, the generated possible combination of suppliers for the sourcing event.

2. The system of claim 1, wherein the second request is received from a second client device (120b) of the plurality of client devices (120)..

3. The system of claim 1 or 2, wherein the first sourcing scenario is stored in a first folder (458) associated with a first user; and wherein the first sourcing scenario is accessible to a second user.

4. The system of any one of the preceding claims, wherein the operations further comprise: generating, for display at the first client device (120a), a user interface (400) comprising the plurality of sourcing event scenarios (404);
wherein the user interface (404) further comprises a first folder (458) and a second folder (460) each comprising a subset of the plurality of templates of sourcing event scenarios.

5. The system of any one of the preceding claims, wherein the operations further comprise receiving, based on the displaying, feedback associated with awarding at least the portion of the sourcing event (125) to at least one of the suppliers of the possible combination of suppliers.

6. The system of any one of the preceding claims, wherein the controller (115) coupled to the scenario library (308) is configured to use a token to authorize the first request in response to the calling and prior to permitting access to the first sourcing event scenario at the scenario library (308).

7. The system of any one of the preceding claims, wherein the controller (115) coupled to the scenario library (308) is configured to authenticate the first client device (120a) associated prior to permitting access to the first sourcing event scenario at the scenario library (308).

8. The system of any one of the preceding claims, wherein the sourcing event (125) comprises a plurality of line items and a plurality of terms associated with the plurality of line items, wherein the plurality of terms comprises at least one of a commodity, discount or a quantity.

9. A computer-implemented method, comprising:
generating (502) a first sourcing event scenario using a scenario library (308) and based on a first request received from a first client device (102a), wherein the first sourcing event scenario comprises a possible combination of suppliers for a sourcing event, and wherein the scenario library (308) is coupled to a controller (115) dedicated to handling the first request using the scenario library (308), and wherein the scenario library (308) provides access to a plurality of sourcing event scenarios (404) to a plurality of client devices (120) comprising the first client device (120a);
storing (504) the first sourcing event scenario as one of the plurality of sourcing event scenarios at the scenario library (308);
modifying (506) a sourcing event template for generating the sourcing event (125), the modifying comprising adding a reference to the first sourcing event scenario to the sourcing event template;
generating (508) the sourcing event (125) using the modified sourcing event template and based on a second request from one of the plurality of client devices (120), wherein the generating comprises: calling the controller (115) of the scenario library (308) to access the first sourcing event scenario at the scenario library (308) based on the reference; and running the first sourcing event scenario to generate the possible combination of suppliers for the sourcing event; and
generating a second sourcing event template based on the sourcing event template, wherein the generating the second sourcing event template comprises: calling the controller (115) of the scenario library (308) to access the plurality of sourcing event scenarios (404) at the scenario library (308); and modifying the modified sourcing event template to include a second reference to a second sourcing event scenario of the plurality of sourcing event scenarios (404), wherein the sourcing event templates are used such that subsequent sourcing events generated based on a particular sourcing event template automatically include all the sourcing event scenarios referenced by the template;
displaying (510), in response to the second request, the generated possible combination of suppliers for the sourcing event (125).

10. The method of claim 9, wherein the second request is received from a second client device (120b) of the plurality of client devices (120);
and/or
wherein the first sourcing scenario is stored in a first folder (458) associated with a first user; and wherein the first sourcing scenario is accessible to a second user.

11. The method of claim 9 or 10, further comprising: generating, for display at the first client device (120a), a user interface (400) comprising the plurality of sourcing event scenarios (404);
wherein the user interface (400) further comprises a first folder (458) and a second folder (460) each comprising a subset of the plurality of templates of sourcing event scenarios.

12. The method of any one of claims 9 to 11, further comprising receiving, based on the displaying, feedback associated with awarding at least the portion of the sourcing event to at least one of the suppliers of the possible combination of suppliers.

13. The method of any one of claims 9 to 12, wherein the sourcing event (125) comprises a plurality of line items and a plurality of terms associated with the plurality of line items, wherein the plurality of terms comprises at least one of a commodity, discount or a quantity.

14. A non-transitory computer-readable medium storing instructions, which when executed by at least one data processor, result in operations comprising:
generating a first sourcing event scenario using a scenario library (308) and based on a first request received from a first client device (120a), wherein the first sourcing event scenario comprises a possible combination of suppliers for a sourcing event (125), and wherein the scenario library (308) is coupled to a controller (115) dedicated to handling the first request using the scenario library (308), and wherein the scenario library (308) provides access to a plurality of sourcing event (125) scenarios to a plurality of client devices (120) comprising the first client device (120a);
storing the first sourcing event scenario as one of the plurality of sourcing event scenarios at the scenario library;
modifying a sourcing event template for generating the sourcing event (125), the modifying comprising adding a reference to the first sourcing event scenario to the sourcing event template;
generating the sourcing event (125) using the modified sourcing event template and based on a second request from one of the plurality of client devices (120), wherein the generating comprises: calling the controller (115) of the scenario library (308) to access the first sourcing event scenario at the scenario library (308) based on the reference; and running the first sourcing event scenario to generate the possible combination of suppliers for the sourcing event (125); and
generating a second sourcing event template based on the sourcing event template, wherein the generating the second sourcing event template comprises: calling the controller (115) of the scenario library (308) to access the plurality of sourcing event scenarios (404) at the scenario library (308); and modifying the modified sourcing event template to include a second reference to a second sourcing event scenario of the plurality of sourcing event scenarios (404), wherein the sourcing event templates are used such that subsequent sourcing events generated based on a particular sourcing event template automatically include all the sourcing event scenarios referenced by the template;
displaying, in response to the second request, the generated possible combination of suppliers for the sourcing event (125).

15. The non-transitory computer-readable medium of claim 14, wherein the second request is received from a second client device (120b) of the plurality of client devices (120).

## Patentansprüche

1. System (100: 600), umfassend:
mindestens einen Datenprozessor (610); und
mindestens einen Speicher (620), der Anweisungen speichert, die zu Vorgängen führen, wenn sie durch den mindestens einen Datenprozessor ausgeführt werden, wobei die Vorgänge umfassen:
Erzeugen (502) eines ersten Beschaffungsereignisszenarios unter Verwendung einer Szenariobibliothek (308) und auf der Basis der ersten Anfrage, die von der ersten Client-Vorrichtung (120a) empfangen wird, wobei das erste Beschaffungsereignisszenario eine mögliche Kombination von Lieferanten für ein Beschaffungsereignis umfasst und wobei die Szenariobibliothek (308) mit einer Steuerungseinrichtung (115) gekoppelt ist, die der Handhabung der ersten Anfrage unter Verwendung der Szenariobibliothek (308) zugeordnet ist, und wobei die Szenariobibliothek (308) einen Zugriff auf eine Mehrzahl von Beschaffungsereignisszenarien für eine Mehrzahl von Client-Vorrichtungen (120), welche die erste Client-Vorrichtung umfassen, bereitstellt;
Speichern (504) des ersten Beschaffungsereignisszenarios als eines der Mehrzahl von Beschaffungsereignisszenarien (404) in der Szenariobibliothek (308);
Modifizieren (506) einer Beschaffungsereignisvorlage zum Erzeugen des Beschaffungsereignisses, wobei das Modifizieren das Hinzufügen eines Verweises auf das erste Beschaffungsereignisszenario zu der Beschaffungsereignisvorlage umfasst;
Erzeugen (508) des Beschaffungsereignisses unter Verwendung der modifizierten Beschaffungsereignisvorlage und auf der Basis einer zweiten Anfrage von einer der Mehrzahl von Client-Vorrichtungen (120), wobei das Erzeugen umfasst: Aufrufen der Steuerungseinrichtung (115) der Szenariobibliothek (308) zum Zugreifen auf das erste Beschaffungsereignisszenario in der Szenariobibliothek (308) auf der Basis des Verweises; und Betreiben des ersten Beschaffungsereignisszenarios zum Erzeugen der möglichen Kombination von Lieferanten für das Beschaffungsereignis (125),
Erzeugen einer zweiten Beschaffungsereignisvorlage auf der Basis der Beschaffungsereignisvorlage, wobei das Erzeugen der zweiten Beschaffungsereignisvorlage umfasst: Aufrufen der Steuerungseinrichtung (115) der Szenariobibliothek (308) zum Zugreifen auf die Mehrzahl von Beschaffungsereignisszenarien (404) in der Szenariobibliothek (308); und Modifizieren der modifizierten Beschaffungsereignisvorlage, so dass sie einen zweiten Verweis auf ein zweites Beschaffungsereignisszenario der Mehrzahl von Beschaffungsereignisszenarien (404) umfasst, wobei die Beschaffungsereignisvorlagen derart verwendet werden, dass nachfolgende Beschaffungsereignisse, die auf der Basis einer bestimmten Beschaffungsereignisvorlage erzeugt werden, automatisch alle Beschaffungsereignisszenarien umfassen, auf die durch die Vorlage verwiesen wird; und
Anzeigen (510), als Reaktion auf die zweite Anfrage, der erzeugten möglichen Kombination von Lieferanten für das Beschaffungsereignis.

2. System nach Anspruch 1, wobei die zweite Anfrage von einer zweiten Client-Vorrichtung (120b) der Mehrzahl von Client-Vorrichtungen (120) empfangen wird.

3. System nach Anspruch 1 oder 2, wobei das erste Beschaffungsszenario in einem ersten Ordner (458) gespeichert ist, der einem ersten Benutzer zugeordnet ist; und wobei auf das erste Beschaffungsszenario durch einen zweiten Benutzer zugegriffen werden kann.

4. System nach einem der vorhergehenden Ansprüche, wobei die Vorgänge ferner umfassen: Erzeugen, zum Anzeigen bei der ersten Client-Vorrichtung (120a), einer Benutzerschnittstelle (400), welche die Mehrzahl von Beschaffungsereignisszenarien (404) umfasst;
wobei die Benutzerschnittstelle (404) ferner einen ersten Ordner (458) und einen zweiten Ordner (460) umfasst, die jeweils einen Teilsatz der Mehrzahl von Vorlagen von Beschaffungsereignisszenarien umfassen.

5. System nach einem der vorhergehenden Ansprüche, wobei die Vorgänge ferner das Empfangen, auf der Basis des Anzeigens, einer Rückmeldung umfassen, die der Vergabe mindestens des Teils des Beschaffungsereignisses (125) an mindestens einen der Lieferanten der möglichen Kombination von Lieferanten zugeordnet ist.

6. System nach einem der vorhergehenden Ansprüche, wobei die Steuerungseinrichtung (115), die mit der Szenariobibliothek (308) gekoppelt ist, zum Verwenden eines Token zum Autorisieren der ersten Anfrage als Reaktion auf das Aufrufen und vor dem Gestatten eines Zugriffs auf das erste Beschaffungsereignisszenario in der Szenariobibliothek (308) ausgebildet ist.

7. System nach einem der vorhergehenden Ansprüche, wobei die Steuerungseinrichtung (115), die mit der Szenariobibliothek (308) gekoppelt ist, zum Authentisieren der ersten Client-Vorrichtung (120a), die vor dem Gestatten eines Zugriffs auf das erste Beschaffungsereignisszenario in der Szenariobibliothek (308) zugeordnet ist, ausgebildet ist.

8. System nach einem der vorhergehenden Ansprüche, wobei das Beschaffungsereignis (125) eine Mehrzahl von Einzelposten und eine Mehrzahl von Begriffen, die der Mehrzahl von Einzelposten zugeordnet sind, umfasst, wobei die Mehrzahl von Begriffen mindestens eines von einem Artikel, einem Rabatt oder einer Menge umfasst.

9. Computerimplementiertes Verfahren, umfassend:
Erzeugen (502) eines ersten Beschaffungsereignisszenarios unter Verwendung einer Szenariobibliothek (308) und auf der Basis einer ersten Anfrage, die von einer ersten Client-Vorrichtung (102a) empfangen wird, wobei das erste Beschaffungsereignisszenario eine mögliche Kombination von Lieferanten für ein Beschaffungsereignis umfasst und wobei die Szenariobibliothek (308) mit einer Steuerungseinrichtung (115) gekoppelt ist, die der Handhabung der ersten Anfrage unter Verwendung der Szenariobibliothek (308) zugeordnet ist, und wobei die Szenariobibliothek (308) einen Zugriff auf eine Mehrzahl von Beschaffungsereignisszenarien (404) für eine Mehrzahl von Client-Vorrichtungen (120), welche die erste Client-Vorrichtung (120a) umfassen, bereitstellt;
Speichern (504) des ersten Beschaffungsereignisszenarios als eines der Mehrzahl von Beschaffungsereignisszenarien in der Szenariobibliothek (308);
Modifizieren (506) einer Beschaffungsereignisvorlage zum Erzeugen des Beschaffungsereignisses (125), wobei das Modifizieren das Hinzufügen eines Verweises auf das erste Beschaffungsereignisszenario zu der Beschaffungsereignisvorlage umfasst;
Erzeugen (508) des Beschaffungsereignisses (125) unter Verwendung der modifizierten Beschaffungsereignisvorlage und auf der Basis einer zweiten Anfrage von einer der Mehrzahl von Client-Vorrichtungen (120), wobei das Erzeugen umfasst: Aufrufen der Steuerungseinrichtung (115) der Szenariobibliothek (308) zum Zugreifen auf das erste Beschaffungsereignisszenario in der Szenariobibliothek (308) auf der Basis des Verweises; und Betreiben des ersten Beschaffungsereignisszenarios zum Erzeugen der möglichen Kombination von Lieferanten für das Beschaffungsereignis, und
Erzeugen einer zweiten Beschaffungsereignisvorlage auf der Basis der Beschaffungsereignisvorlage, wobei das Erzeugen der zweiten Beschaffungsereignisvorlage umfasst: Aufrufen der Steuerungseinrichtung (115) der Szenariobibliothek (308) zum Zugreifen auf die Mehrzahl von Beschaffungsereignisszenarien (404) in der Szenariobibliothek (308); und Modifizieren der modifizierten Beschaffungsereignisvorlage, so dass sie einen zweiten Verweis auf ein zweites Beschaffungsereignisszenario der Mehrzahl von Beschaffungsereignisszenarien (404) umfasst, wobei die Beschaffungsereignisvorlagen derart verwendet werden, dass nachfolgende Beschaffungsereignisse, die auf der Basis einer bestimmten Beschaffungsereignisvorlage erzeugt werden, automatisch alle Beschaffungsereignisszenarien umfassen, auf die durch die Vorlage verwiesen wird;
Anzeigen (510), als Reaktion auf die zweite Anfrage, der erzeugten möglichen Kombination von Lieferanten für das Beschaffungsereignis (125).

10. Verfahren nach Anspruch 9, wobei die zweite Anfrage von einer zweiten Client-Vorrichtung (120b) der Mehrzahl von Client-Vorrichtungen (120) empfangen wird;
und/oder
wobei das erste Beschaffungsszenario in einem ersten Ordner (458) gespeichert ist, der einem ersten Benutzer zugeordnet ist; und wobei auf das erste Beschaffungsszenario durch einen zweiten Benutzer zugegriffen werden kann.

11. Verfahren nach Anspruch 9 oder 10, ferner umfassend: Erzeugen, zum Anzeigen bei der ersten Client-Vorrichtung (120a), einer Benutzerschnittstelle (400), welche die Mehrzahl von Beschaffungsereignisszenarien (404) umfasst;
wobei die Benutzerschnittstelle (404) ferner einen ersten Ordner (458) und einen zweiten Ordner (460) umfasst, die jeweils einen Teilsatz der Mehrzahl von Vorlagen von Beschaffungsereignisszenarien umfassen.

12. Verfahren nach einem der Ansprüche 9 bis 11, ferner umfassend das Empfangen, auf der Basis des Anzeigens, einer Rückmeldung, die der Vergabe mindestens des Teils des Beschaffungsereignisses an mindestens einen der Lieferanten der möglichen Kombination von Lieferanten zugeordnet ist.

13. Verfahren nach einem der Ansprüche 9 bis 12, wobei das Beschaffungsereignis (125) eine Mehrzahl von Einzelposten und eine Mehrzahl von Begriffen, die der Mehrzahl von Einzelposten zugeordnet sind, umfasst, wobei die Mehrzahl von Begriffen mindestens eines von einem Artikel, einem Rabatt oder einer Menge umfasst.

14. Nicht-flüchtiges computerlesbares Medium, das Anweisungen speichert, die, wenn sie durch mindestens einen Datenprozessor ausgeführt werden, zu Vorgängen führen, umfassend:
Erzeugen eines ersten Beschaffungsereignisszenarios unter Verwendung einer Szenariobibliothek (308) und auf der Basis einer ersten Anfrage, die von einer ersten Client-Vorrichtung (120a) empfangen wird, wobei das erste Beschaffungsereignisszenario eine mögliche Kombination von Lieferanten für ein Beschaffungsereignis (125) umfasst und wobei die Szenariobibliothek (308) mit einer Steuerungseinrichtung (115) gekoppelt ist, die der Handhabung der ersten Anfrage unter Verwendung der Szenariobibliothek (308) zugeordnet ist, und wobei die Szenariobibliothek (308) einen Zugriff auf eine Mehrzahl von Beschaffungsereignisszenarien (125) für eine Mehrzahl von Client-Vorrichtungen (120), welche die erste Client-Vorrichtung (120a) umfassen, bereitstellt;
Speichern des ersten Beschaffungsereignisszenarios als eines der Mehrzahl von Beschaffungsereignisszenarien in der Szenariobibliothek;
Modifizieren einer Beschaffungsereignisvorlage zum Erzeugen des Beschaffungsereignisses (125), wobei das Modifizieren das Hinzufügen eines Verweises auf das erste Beschaffungsereignisszenario zu der Beschaffungsereignisvorlage umfasst;
Erzeugen des Beschaffungsereignisses (125) unter Verwendung der modifizierten Beschaffungsereignisvorlage und auf der Basis einer zweiten Anfrage von einer der Mehrzahl von Client-Vorrichtungen (120), wobei das Erzeugen umfasst: Aufrufen der Steuerungseinrichtung (115) der Szenariobibliothek (308) zum Zugreifen auf das erste Beschaffungsereignisszenario in der Szenariobibliothek (308) auf der Basis des Verweises; und Betreiben des ersten Beschaffungsereignisszenarios zum Erzeugen der möglichen Kombination von Lieferanten für das Beschaffungsereignis (125), und
Erzeugen einer zweiten Beschaffungsereignisvorlage auf der Basis der Beschaffungsereignisvorlage, wobei das Erzeugen der zweiten Beschaffungsereignisvorlage umfasst: Aufrufen der Steuerungseinrichtung (115) der Szenariobibliothek (308) zum Zugreifen auf die Mehrzahl von Beschaffungsereignisszenarien (404) in der Szenariobibliothek (308); und Modifizieren der modifizierten Beschaffungsereignisvorlage, so dass sie einen zweiten Verweis auf ein zweites Beschaffungsereignisszenario der Mehrzahl von Beschaffungsereignisszenarien (404) umfasst, wobei die Beschaffungsereignisvorlagen derart verwendet werden, dass nachfolgende Beschaffungsereignisse, die auf der Basis einer bestimmten Beschaffungsereignisvorlage erzeugt werden, automatisch alle Beschaffungsereignisszenarien umfassen, auf die durch die Vorlage verwiesen wird;
Anzeigen, als Reaktion auf die zweite Anfrage, der erzeugten möglichen Kombination von Lieferanten für das Beschaffungsereignis (125).

15. Nicht-flüchtiges computerlesbares Medium nach Anspruch 14, wobei die zweite Anfrage von einer zweiten Client-Vorrichtung (120b) der Mehrzahl von Client-Vorrichtungen (120) empfangen wird.

## Revendications

1. Un système (100 : 600), comprenant :
au moins un processeur de données (610) ; et
au moins une mémoire (620) stockant des instructions qui entraînent,
lorsqu'elles sont exécutées par ledit au moins un processeur de données, des opérations, lesdites opérations comprenant :
la génération (502) d'un premier scénario d'événement d'approvisionnement à l'aide d'une bibliothèque de scénarios (308) et sur la base de la première requête reçue depuis le premier dispositif client (120a), et sachant que le premier scénario d'événement d'approvisionnement comprend une combinaison possible de fournisseurs pour un événement d'approvisionnement, et sachant que la bibliothèque de scénarios (308) est couplée à un dispositif de commande (115) dédié au traitement de la première requête à l'aide de la bibliothèque de scénarios (308), et sachant que la bibliothèque de scénarios (308) fournit un accès à une pluralité de scénarios d'événements d'approvisionnement à une pluralité de dispositifs clients (120) comprenant le premier dispositif client ;
le stockage (504) du premier scénario d'événement d'approvisionnement comme l'un de la pluralité de scénarios d'événements d'approvisionnement (404) dans la bibliothèque de scénarios (308) ;
la modification (506) d'un modèle d'événement d'approvisionnement pour générer l'événement d'approvisionnement, la modification comprenant l'ajout d'une référence au premier scénario d'événement d'approvisionnement dans le modèle d'événement d'approvisionnement ;
générer (508) l'événement d'approvisionnement à l'aide du modèle d'événement d'approvisionnement modifié et sur la base d'une deuxième requête provenant de l'un de la pluralité de dispositifs clients (120), sachant que la génération comprend : l'appel du dispositif de commande (115) de la bibliothèque de scénarios (308) pour accéder au premier scénario d'événement d'approvisionnement dans la bibliothèque de scénarios (308) sur la base de la référence ; et l'exécution du premier scénario d'événement d'approvisionnement pour générer la combinaison possible de fournisseurs pour l'événement d'approvisionnement (125),
la génération d'un deuxième modèle d'événement d'approvisionnement sur la base du modèle d'événement d'approvisionnement, sachant que la génération du deuxième modèle d'événement d'approvisionnement comprend : l'appel du dispositif de commande (115) de la bibliothèque de scénarios (308) pour accéder à la pluralité de scénarios d'événements d'approvisionnement (404) dans la bibliothèque de scénarios (308) ; et la modification du modèle d'événement d'approvisionnement modifié pour inclure une deuxième référence à un deuxième scénario d'événement d'approvisionnement parmi la pluralité de scénarios d'événements d'approvisionnement (404), sachant que les modèles d'événements d'approvisionnement sont utilisés de manière que des événements d'approvisionnement ultérieurs générés sur la base d'un modèle d'événement d'approvisionnement particulier incluent automatiquement tous les scénarios d'événements d'approvisionnement référencés par le modèle ; et
l'affichage (510), en réponse à la deuxième requête, de la combinaison possible de fournisseurs générée pour l'événement d'approvisionnement.

2. Le système d'après la revendication 1, sachant que la deuxième requête est reçue depuis un deuxième dispositif client (120b) parmi la pluralité de dispositifs clients (120)..

3. Le système d'après la revendication 1 ou 2, sachant que le premier scénario d'approvisionnement est stocké dans un premier dossier (458) associé à un premier utilisateur ; et sachant que le premier scénario d'approvisionnement est accessible à un deuxième utilisateur.

4. Le système d'après l'une quelconque des revendications précédentes, sachant que les opérations comprennent en outre : la génération, pour un affichage sur le premier dispositif client (120a), d'une interface utilisateur (400) comprenant la pluralité de scénarios d'événements d'approvisionnement (404) ;
sachant que l'interface utilisateur (404) comprend en outre un premier dossier (458) et un deuxième dossier (460) comprenant chacun un sous-ensemble de la pluralité de modèles de scénarios d'événements d'approvisionnement.

5. Le système d'après l'une quelconque des revendications précédentes, sachant que les opérations comprennent en outre la réception, sur la base de l'affichage, d'un retour d'information associé à l'attribution de l'au moins une partie de l'événement d'approvisionnement (125) à au moins l'un des fournisseurs de la combinaison possible de fournisseurs.

6. Le système d'après l'une quelconque des revendications précédentes, sachant que le dispositif de commande (115) couplé à la bibliothèque de scénarios (308) est configuré pour utiliser un jeton afin d'autoriser la première requête en réponse à l'appel et avant d'autoriser l'accès au premier scénario d'événement d'approvisionnement dans la bibliothèque de scénarios (308).

7. Le système d'après l'une quelconque des revendications précédentes, sachant que le dispositif de commande (115) couplé à la bibliothèque de scénarios (308) est configuré pour authentifier le premier dispositif client (120a) associé avant d'autoriser l'accès au premier scénario d'événement d'approvisionnement dans la bibliothèque de scénarios (308).

8. Le système d'après l'une quelconque des revendications précédentes, sachant que l'événement d'approvisionnement (125) comprend une pluralité de lignes (*line items*) et une pluralité de conditions (*terms*) associées à ladite pluralité de lignes, ladite pluralité de conditions comprenant au moins l'une parmi une marchandise, une remise ou une quantité.

9. Un procédé mis en œuvre par ordinateur, comprenant :
la génération (502) d'un premier scénario d'événement d'approvisionnement à l'aide d'une bibliothèque de scénarios (308) et sur la base d'une première requête reçue depuis le premier dispositif client (102a), sachant que le premier scénario d'événement d'approvisionnement comprend une combinaison possible de fournisseurs pour un événement d'approvisionnement, et sachant que la bibliothèque de scénarios (308) est couplée à un dispositif de commande (115) dédié au traitement de la première requête à l'aide de la bibliothèque de scénarios (308), et sachant que la bibliothèque de scénarios (308) fournit un accès à une pluralité de scénarios d'événements d'approvisionnement à une pluralité de dispositifs clients (120) comprenant le premier dispositif client (120a) ;
le stockage (504) du premier scénario d'événement d'approvisionnement comme l'un de la pluralité de scénarios d'événements d'approvisionnement (404) dans la bibliothèque de scénarios (308) ;
la modification (506) d'un modèle d'événement d'approvisionnement pour générer l'événement d'approvisionnement (125), la modification comprenant l'ajout d'une référence au premier scénario d'événement d'approvisionnement dans le modèle d'événement d'approvisionnement ;
générer (508) l'événement d'approvisionnement (125) à l'aide du modèle d'événement d'approvisionnement modifié et sur la base d'une deuxième requête provenant de l'un de la pluralité de dispositifs clients (120), sachant que la génération comprend : l'appel du dispositif de commande (115) de la bibliothèque de scénarios (308) pour accéder au premier scénario d'événement d'approvisionnement dans la bibliothèque de scénarios (308) sur la base de la référence ; et l'exécution du premier scénario d'événement d'approvisionnement pour générer la combinaison possible de fournisseurs pour l'événement d'approvisionnement ; et
la génération d'un deuxième modèle d'événement d'approvisionnement sur la base du modèle d'événement d'approvisionnement, sachant que la génération du deuxième modèle d'événement d'approvisionnement comprend : l'appel du dispositif de commande (115) de la bibliothèque de scénarios (308) pour accéder à la pluralité de scénarios d'événements d'approvisionnement (404) dans la bibliothèque de scénarios (308) ; et la modification du modèle d'événement d'approvisionnement modifié pour inclure une deuxième référence à un deuxième scénario d'événement d'approvisionnement parmi la pluralité de scénarios d'événements d'approvisionnement (404), sachant que les modèles d'événements d'approvisionnement sont utilisés de manière que des événements d'approvisionnement ultérieurs générés sur la base d'un modèle d'événement d'approvisionnement particulier incluent automatiquement tous les scénarios d'événements d'approvisionnement référencés par le modèle ; et
l'affichage (510), en réponse à la deuxième requête, de la combinaison possible de fournisseurs générée pour l'événement d'approvisionnement (125).

10. Le procédé d'après la revendication 9, sachant que la deuxième requête est reçue depuis un deuxième dispositif client (120b) parmi la pluralité de dispositifs clients (120) ;
et/ou
sachant que le premier scénario d'approvisionnement est stocké dans un premier dossier (458) associé à un premier utilisateur ; et sachant que le premier scénario d'approvisionnement est accessible à un deuxième utilisateur.

11. Le procédé d'après la revendication 9 ou 10, comprenant en outre : la génération, pour un affichage sur le premier dispositif client (120a), d'une interface utilisateur (400) comprenant la pluralité de scénarios d'événements d'approvisionnement (404) ;
sachant que l'interface utilisateur (400) comprend en outre un premier dossier (458) et un deuxième dossier (460) comprenant chacun un sous-ensemble de la pluralité de modèles de scénarios d'événements d'approvisionnement.

12. Le procédé d'après l'une quelconque des revendications de 9 à 11, comprenant en outre la réception, sur la base de l'affichage, d'un retour d'information associé à l'attribution de l'au moins une partie de l'événement d'approvisionnement (125) à au moins l'un des fournisseurs de la combinaison possible de fournisseurs.

13. Le procédé d'après l'une quelconque des revendications de 9 à 12, sachant que l'événement d'approvisionnement (125) comprend une pluralité de lignes (*line items*) et une pluralité de conditions (*terms*) associées à ladite pluralité de lignes, ladite pluralité de conditions comprenant au moins l'une parmi une marchandise, une remise ou une quantité.

14. Un support non transitoire lisible par ordinateur stockant des instructions qui, lorsqu'elles sont exécutées par au moins un processeur de données, entraînent des opérations comprenant :
la génération d'un premier scénario d'événement d'approvisionnement à l'aide d'une bibliothèque de scénarios (308) et sur la base d'une première requête reçue depuis le premier dispositif client (120a), sachant que le premier scénario d'événement d'approvisionnement comprend une combinaison possible de fournisseurs pour un événement d'approvisionnement (125), et sachant que la bibliothèque de scénarios (308) est couplée à un dispositif de commande (115) dédié au traitement de la première requête à l'aide de la bibliothèque de scénarios (308), et sachant que la bibliothèque de scénarios (308) fournit un accès à une pluralité de scénarios d'événements d'approvisionnement (125) à une pluralité de dispositifs clients (120) comprenant le premier dispositif client (120a) ;
le stockage du premier scénario d'événement d'approvisionnement comme l'un de la pluralité de scénarios d'événements d'approvisionnement dans la bibliothèque de scénarios ;
la modification d'un modèle d'événement d'approvisionnement pour générer l'événement d'approvisionnement (125), la modification comprenant l'ajout d'une référence au premier scénario d'événement d'approvisionnement dans le modèle d'événement d'approvisionnement ;
générer l'événement d'approvisionnement (125) à l'aide du modèle d'événement d'approvisionnement modifié et sur la base d'une deuxième requête provenant de l'un de la pluralité de dispositifs clients (120), sachant que la génération comprend : l'appel du dispositif de commande (115) de la bibliothèque de scénarios (308) pour accéder au premier scénario d'événement d'approvisionnement dans la bibliothèque de scénarios (308) sur la base de la référence ; et l'exécution du premier scénario d'événement d'approvisionnement pour générer la combinaison possible de fournisseurs pour l'événement d'approvisionnement (125) ; et
la génération d'un deuxième modèle d'événement d'approvisionnement sur la base du modèle d'événement d'approvisionnement, sachant que la génération du deuxième modèle d'événement d'approvisionnement comprend : l'appel du dispositif de commande (115) de la bibliothèque de scénarios (308) pour accéder à la pluralité de scénarios d'événements d'approvisionnement (404) dans la bibliothèque de scénarios (308) ; et la modification du modèle d'événement d'approvisionnement modifié pour inclure une deuxième référence à un deuxième scénario d'événement d'approvisionnement parmi la pluralité de scénarios d'événements d'approvisionnement (404), sachant que les modèles d'événements d'approvisionnement sont utilisés de manière que des événements d'approvisionnement ultérieurs générés sur la base d'un modèle d'événement d'approvisionnement particulier incluent automatiquement tous les scénarios d'événements d'approvisionnement référencés par le modèle ;
l'affichage, en réponse à la deuxième requête, de la combinaison possible de fournisseurs générée pour l'événement d'approvisionnement (125).

15. Le support non transitoire lisible par ordinateur d'après la revendication 14, sachant que la deuxième requête est reçue depuis un deuxième dispositif client (120b) parmi la pluralité de dispositifs clients (120).
